# EUROPÄISCHE PATENTSCHRIFT

(11) **EP 4 416 682 B1**
(45) Veröffentlichungstag und Bekanntmachung des Hinweises auf die Patenterteilung: **16.04.2025**
(21) Anmeldenummer: 22782890.2
(22) Anmeldetag: 23.09.2022
(51) Int. Cl.: G06T 7/12, G06T 7/73

(54) **VERFAHREN ZUM ERMITTELN EINES KNICKWINKELS, VERARBEITUNGSEINHEIT UND FAHRZEUG**
METHOD FOR DETERMINING AN ARTICULATION ANGLE, PROCESSING UNIT AND VEHICLE
PROCÉDÉ DE DÉTERMINATION D'UN ANGLE DE FLAMBAGE, UNITÉ DE TRAITEMENT ET VÉHICULE

(30) Priorität: 15.10.2021 DE 102021126816
(43) Veröffentlichungstag der Anmeldung: 21.08.2024
(73) Patentinhaber: ZF CV Systems Global GmbH, 3006 Bern (CH)
(72) Erfinder: KLINGER, Tobias, 31832 Springe (DE)
(74) Vertreter: Rabe, Dirk-Heinrich
(86) Internationale Anmeldenummer: PCT/EP2022/076555
(87) Internationale Veröffentlichungsnummer: WO 2023/061731

(56) Entgegenhaltungen:
- EP-A1- 3 537 382
- DE-A1- 102019 007 205
- DE-A1- 102019 106 275
- US-A1- 2019 353 478
- US-A1- 2020 143 174
- SAXE CHRISTOPHER DE ET AL: "Camera-Based Articulation Angle Sensing for Heavy Goods Vehicles", IEEE TRANSACTIONS ON VEHICULAR TECHNOLOGY, IEEE, USA, vol. 70, no. 8, 23 June 2021 (2021-06-23), pages 7522 - 7535, XP011872042, ISSN: 0018-9545, [retrieved on 20210814], DOI: 10.1109/TVT.2021.3091759

## Beschreibung

Die Erfindung betrifft ein Verfahren zum Ermitteln eines Knickwinkels, eine Verarbeitungseinheit zur Durchführung des Verfahrens sowie ein Fahrzeug mit der Verarbeitungseinheit.

Die Abschätzung eines Knickwinkels zwischen einem Zugfahrzeug und einem daran angekuppelten Anhänger ist z.B. für Stabilitätsfunktionen oder auch Fahrerassistenzfunktionen erforderlich. Der Knickwinkel kann dabei beispielsweise durch die Ermittlung einer Anhänger-Pose bzw. einer Anhänger-Orientierung im dreidimensionalen Raum abgeschätzt werden, was herkömmlicherweise durch eine entsprechende Sensorik am Zugfahrzeug und/oder mittels Bildverarbeitung durchgeführt wird. So ist beispielsweise vorgesehen, einen Anhänger mittels LIDAR-Sensoren oder 3D-Stereo-Kameras räumlich zu lokalisieren und/oder mithilfe zusätzlicher flächiger Maker-Strukturen (QR-Codes oder Aruco-Marker) an dem Anhänger eine Anhänger-Position und/oder Anhänger-Orientierung abzuschätzen. Weiterhin ist bekannt, wie mithilfe einer monokularen Kamera durch die Vorwärts- oder Rückwärtsbewegung eines Fahrzeugs, an dem die Kamera montiert ist, anhand photogrammetrischer Methoden die Struktur der Szene in 3D bestimmt werden kann (sog. Structure from Motion (SfM)).

In DE 10 2016 011 324 A1, DE 10 2018 114 730 A1, WO 2018/210990 A1 oder DE 10 2017 119 968 A1 ist beispielsweise beschrieben, eine Anhänger-Position und eine Anhänger-Orientierung des jeweiligen Objektes bzw. des Anhängers relativ zur Kamera bzw. dem Zugfahrzeug mittels Bildverarbeitung herzuleiten. In Abhängigkeit davon können beispielsweise ein Knickwinkel oder ein Abstand ermittelt werden. Auch mit einer Mono-Kamera kann die Anhänger-Pose ermittelt werden, indem mindestens drei Marker, die vorzugsweise flächig auf dem Anhänger aufgebracht sind, in einem aufgenommenen Einzelbild lokalisiert werden und in Kenntnis der Marker-Positionen auf dem Anhänger eine Transformationsmatrix ermittelt wird, aus der die Anhänger-Pose hergeleitet werden kann.

Eine Erkennung eines Knickwinkels über eine Kamera ist weiterhin in US 2014 200759 A beschrieben, wobei ein flächiger Marker auf dem Anhänger vom Zugfahrzeug aus über die Zeit beobachtet und daraus der Knickwinkel abgeschätzt wird. Auch JP 2002 012 172 A, US2014277942A1, US 2008 231 701 A und US 2017106796 A beschreiben eine Knickwinkelerkennung in Abhängigkeit von flächigen Markern. In US 2006 293 800 A können Ankuppelpunkte zu einer erleichterten automatischen Erkennung einen Marker tragen. Der Marker kann eine spezielle Farbe, Textur oder Wellenreflexionseigenschaft besitzen. In DE 10 2004 025 252 B4 wird weiterhin beschrieben, den Knickwinkel zu ermitteln, indem von einem Sender Strahlung auf einen halbkreis- oder halbkugelförmigen Reflektor gesendet und die davon reflektierte Strahlung anschließend detektiert wird. In DE 103 025 45 A1 ist zudem beschrieben über einen Objekterkennungsalgorithmus eine Kupplung zu erfassen. In EP 3 180 769 B1 ist zudem beschrieben, über Kameras eine Rückseite eines Anhängers zu erfassen und aus dem Bild verfolgbare Features, z.B. eine Kante oder Ecke, zu erkennen. Diese werden dann über die Zeit verfolgt, um insbesondere auf einen Knickwinkel zwischen dem Zugfahrzeug und dem Anhänger zu schließen.

In US 2018 039 266 A ist ergänzend beschrieben, auf Informationen eines zweidimensionalen Barcodes bzw. QR-Codes zurückzugreifen. In DE 10 2016 209 418 A1 kann ebenfalls ein QR-Code mit einer Kamera ausgelesen werden, um den Anhänger zu identifizieren und Anhängerparameter an eine Rückfahrassistenz weiterzugeben. Alternativ oder ergänzend kann ein am Anhänger befindliches RFID-Lesegerät einen RFID-Transponder, der am Zugfahrzeug beispielsweise in Form eines Etiketts angebracht ist, auslesen. Dadurch kann eine Position des QR-Codes bzw. des RFID-Transponders berechnet werden. Eine Orientierung wird dabei nicht ermittelt. Auch in WO18060192A1 ist eine Lösung mittels funkbasierter Transponder vorgesehen. In DE 10 2006 040 879 B4 werden ebenfalls RFID-Elemente am Anhänger zur Triangulation beim Heranfahren verwendet.

In WO 2008064892 A1 ist ein Beobachtungselement vorgesehen, das mindestens drei Hilfspunkte bzw. Messpunkte aufweist, die von einer Kamera erkannt werden können. Aus geometrischen Betrachtungen werden die Koordinaten bzw. Vektoren der Schwerpunkte der Hilfspunkte ermittelt und daraus die Koordinaten der Messpunkte relativ zur Kamera bzw. zum Bildsensor. Daraus kann ein Knickwinkel ermittelt werden.

Nachteilig bei den beschriebenen Lösungen ist, dass diese Verfahren bzw. Systeme entweder sehr aufwändig durchzuführen sind bzw. auf eine kostenintensive Sensorik und zusätzlich anzubringende Marker o.ä. zurückgreifen oder aber eine Detektion der Marker bei unterschiedlichen Umgebungsbedingungen nicht zuverlässig möglich ist. Beispielsweise können flächige Marker bei Dunkelheit und/oder unter extremen bzw. flachen Blinkwinkeln nicht sicher erfasst werden, wodurch die Bestimmung der Anhänger-Pose bzw. des Knickwinkels des Anhängers relativ zum Zugfahrzeug nicht zuverlässig erfolgen kann. Zudem können Anhänger ohne derartige Marker nicht lokalisiert werden.

In DE 10 2008 045 436 A1 ist weiterhin vorgesehen, den Anhänger in einem Einzelbild abzubilden und das Einzelbild mit einem abgespeicherten Referenzbild zu vergleichen. In jedem Referenzbild ist der Anhänger mit einem anderen Knickwinkel relativ zum Zugfahrzeug dargestellt, so dass bei entsprechender Übereinstimmung zwischen dem Einzelbild und dem Referenzbild der Knickwinkel abgeschätzt werden kann. Für eine Knickwinkelbestimmung ist also für jeden Knickwinkel ein Referenzbild aufzunehmen.

In DE 10 2010 006 521 A1 ist ferner beschrieben, den Knickwinkel mittels Flussvektoren zu ermitteln, wobei die Flussvektoren aus zeitlich aufeinanderfolgenden Einzelbildern ermittelt werden. In DE 10 2016 121 514 A1 wird der Knickwinkel aus der durch Bildverarbeitung abgeschätzten Position einer hinteren Kante des Anhängers berechnet. In DE 10 2019 103 742 A1 wird der Knickwinkel durch zwei unterschiedliche Algorithmen aus Sensordaten bestimmt. In DE 10 2019 106 275 A1 wird ein Muster auf einen Teilbereich eines Teilfahrzeuges projiziert und der Knickwinkel aus der Veränderung des abgebildeten Musters ermittelt. In DE 10 2019 110 018 A1 und DE 10 2019 115 789 A1 wird der Knickwinkel sensorisch über einen Knickwinkelsensor oder über eine Kamera erfasst. Auch in DE 10 2018 005 118 A1, EP 2 551 132 B1 oder DE 10 2012 006 206 A1 kann die Ermittlung des Knickwinkels über eine Kamera, insbesondere eine monokulare Kamera, erfolgen, wobei dazu ein Structure-from-Motion (SfM) Verfahren angewandt wird.

Die US 2020 143174 A1 offenbart ein System und eine Methode zur Erkennung des Anhängerwinkels. In einer Ausführungsform umfasst ein fahrzeuginternes Steuersystem einen optischen Sensor, der so konfiguriert ist, dass er auf einem Traktor montiert wird, sodass er auf einen an den Traktor gekoppelten Anhänger gerichtet ist, wobei der optische Sensor außerdem so konfiguriert ist, dass er optische Daten erzeugt, die einen zwischen dem Anhänger und dem Traktor gebildeten Winkel angeben. Das System umfasst außerdem einen Prozessor und einen computerlesbaren Speicher, der mit dem Prozessor in Verbindung steht und auf dem computerausführbare Anweisungen gespeichert sind, um den Prozessor zu veranlassen, die optischen Daten von dem optischen Sensor zu empfangen, basierend auf den optischen Daten mindestens eine Kandidatenebene zu bestimmen, die eine in den optischen Daten sichtbare Oberfläche des Anhängers darstellt, und basierend auf der mindestens einen Kandidatenebene einen Winkel zwischen dem Anhänger und der Zugmaschine zu bestimmen.

Aufgabe der Erfindung ist, ein Verfahren zum Ermitteln eines Knickwinkels zwischen einem Zugfahrzeug und einem daran angekoppelten Anhänger anzugeben, mit dem sich der Knickwinkel einfach und zuverlässig ermitteln lässt. Aufgabe ist weiterhin, eine Verarbeitungseinheit und ein Fahrzeug zur Durchführung des Verfahrens anzugeben.

Diese Aufgabe wird durch ein Verfahren, eine Verarbeitungseinheit sowie ein Fahrzeug gemäß den unabhängigen Ansprüchen gelöst. Die Unteransprüche geben bevorzugte Weiterbildungen an.

Erfindungsgemäß ist demnach ein Verfahren zum Ermitteln eines Knickwinkels zwischen einem Zugfahrzeug und einem daran angekoppelten Anhänger vorgesehen, wobei der Anhänger mithilfe eines Kamerasystems, insbesondere mit einer monokularen Kamera, in Einzelbildern mit Einzelbild-Bildpunkten abgebildet werden kann, wobei mindestens die folgenden Schritte vorgesehen sind:
- Ermitteln einer Punktewolke aus mindestens einem Einzelbild, in dem zumindest der Anhänger abgebildet ist, wobei die Punktewolke aus Objekt-Punkten besteht, die dem Anhänger zugeordnet sind. Die Punktewolke liegt dabei vorzugsweise in einem dreidimensionalen Koordinatensystem vor, in dem die einzelnen Objekt-Punkte über deren Weltkoordinaten dargestellt sind. Die Punktewolke kann dabei durch Bildverarbeitungsmethoden aus dem mindestens einen aufgenommenen Einzelbild erstellt werden, vorzugsweise durch ein Structure-from-Motion (SfM) Verfahren aus mindestens zwei von einer monokularen Kamera erfassten Einzelbildern oder auch aus einem Einzelbild einer Stereo-Kamera durch entsprechende bildverarbeitende Verfahren. Als Kamera kann dabei vorteilhafterweise eine bereits bestehende oder auch anderweitig einsetzbare Rückfahrkamera, deren Sichtbereich auf den Rückraum des Zugfahrzeuges, in dem sich normalerweise der Anhänger befindet, ausgerichtet bzw. ausrichtbar ist, verwendet werden. Dabei kann es sich beispielsweise um eine Kamera handeln, die zur Einhaltung der UNE-CE-Vorschriften zur Überwachung des rückwärtigen Raums hinter dem Zugfahrzeug vorgesehen ist.
- Bilden mindestens einer planen bzw. ebenen Referenz-Fläche aus denjenigen benachbarten Objekt-Punkten der Punktewolke, die im Wesentlichen in derselben Ebene liegen, wobei die jeweilige plane Referenz-Fläche in einer festen räumlichen Orientierung und/oder einer festen räumlichen Position relativ zum Anhänger liegt. Es werden also benachbarte Objekt-Punkte in der Punktewolke gesucht, die in derselben Ebene liegen und eine zusammenhängende Fläche auf dem Anhänger ausbilden, und diese der planen Referenz-Fläche zugeordnet. Um darauf nachfolgend zurückgreifen zu können, kann die mindestens eine gebildete plane Referenz-Fläche und/oder auch die zugrundeliegenden Punktewolke abgespeichert werden, vorzugsweise zusammen mit der räumlichen Orientierung und/oder der räumlichen Position der jeweiligen planen Referenz-Fläche relativ zum Anhänger, um nachfolgend auch auf Informationen über die räumliche Lage zurückgreifen zu können.
- Einlesen mindestens eines Einzelbildes, in dem der an das Zugfahrzeug angekuppelte Anhänger abgebildet ist, und Ermitteln mindestens einer Teil-Fläche in dem mindestens einen eingelesenen Einzelbild. Im angekoppelten Zustand wird also nachfolgend im Einzelbild erneut nach Teil-Flächen auf dem Anhänger gesucht.
- Einpassen der mindestens einen vorher gebildeten und hinterlegten planen Referenz-Fläche in die mindestens eine im angekuppelten Zustand ermittelte Teil-Fläche aus dem Einzelbild unter Anwendung einer geometrischen Transformation. Die als Template bzw. Vorlage dienende plane Referenz-Fläche, deren relative Lage (Referenz-Orientierung/Referenz-Position) am bzw. relativ zum Anhänger bekannt ist, wird also nachfolgend in der aktuellen Fahrsituation in die Teil-Fläche des abgebildeten Anhängers eingefittet.
- Ermitteln des Knickwinkels zwischen dem Zugfahrzeug und dem Anhänger in Abhängigkeit eines rotatorischen Anteils der angewandten geometrischen Transformation, wobei der rotatorische Anteil der angewandten geometrischen Transformation eine Rotation der planen Referenz-Fläche um eine Schwenkachse des Anhängers charakterisiert. Aus der Transformation(svorschrift), die das vorher ermittelte Template bzw. die Referenz-Fläche auf die Teil-Fläche aus dem Einzelbild der aktuellen Fahrsituation abbildet, wird also nur der betreffende rotatorische Anteil herangezogen, um die veränderte relative Lage der Referenz-Fläche und damit auch des Anhängers und daraus den Knickwinkel abzuschätzen.

Vorteilhafterweise wird also durch ein Template-Matching-Verfahren eine einfache Abschätzung des Knickwinkels ermöglicht, wobei dazu nur ein begrenzter Flächenbereich des Anhängers zu betrachten ist, der vorzugsweise eine einfache geometrische Form besitzt, beispielweise durch ein Viereck. Dieser Flächenbereich ist vorher nicht zwangsläufig auf den Anhänger aufzubringen, da auf einen oder mehrere bereits bestehende abgrenzbare Flächenbereiche zurückgegriffen werden kann. Derartige Flächenbereiche werden vorab auf dem Anhänger automatisch gesucht, um das Template bzw. die Referenz-Fläche zu ermitteln, und während der Fahrt entsprechend wiedergefunden, so dass aus geometrischen Betrachtungen mithilfe der geometrischen Transformation in einfacher Weise der Knickwinkel abgeschätzt werden kann. Zur Durchführung des Verfahrens ist daher im einfachsten Fall lediglich ein Kamerasystem mit einer auf den Rückraum ausgerichteten Kamera und ein entsprechender Bildverarbeitungsalgorithmus ausreichend, mit denen sich die Flächenbereiche eindeutig ermitteln lassen. Durch Rückgriff auf einen SfM-Algorithmus (SfM: Structure-from-Motion) ist vorteilhafterweise eine monokulare Kamera ausreichend, was die Kosten und den Verarbeitungsaufwand minimiert.

Erfindungsgemäß sind weiterhin eine Verarbeitungseinheit zur Durchführung des erfindungsgemäßen Verfahrens sowie ein Fahrzeug mit einer derartigen Verarbeitungseinheit vorgesehen.

Vorzugsweise ist weiterhin vorgesehen, dass das mindestens eine Einzelbild zum Ermitteln der Punktewolke aufgenommen wird, wenn der Anhänger noch nicht an das Zugfahrzeug angekuppelt ist, beispielsweise während eines Ankoppelvorganges. Die Ermittlung der Referenz-Fläche erfolgt also basierend auf einer Punktewolke, die in einer Fahrsituation aufgenommen wird, in der sich das Zugfahrzeug mit hoher Wahrscheinlichkeit gegenüber dem Anhänger bewegt. Dadurch können in eindeutiger und zuverlässiger Weise entsprechende Referenz-Flächen aus der Punktewolke extrahiert werden, da der Anhänger in seiner dreidimensionalen Form zuverlässig und idealerweise auch umfassend in der Punktewolke erfasst ist, insbesondere dann, wenn die Punktewolke durch einen SfM-Algorithmus ermittelt wird.

Vorzugsweise ist weiterhin vorgesehen, dass die Punktewolke mithilfe des SfM-Algorithmus aus mindestens zwei Einzelbildern ermittelt wird, wobei der Anhänger in den mindestens zwei Einzelbildern von mindestens zwei unterschiedlichen Standpunkten aus aufgenommen ist, vorzugsweise durch eine monokulare Kamera des Kamerasystems. Dadurch kann eine Punktewolke aus mehreren Objekt-Punkten, die zumindest auch dem Anhänger zugeordnet sind, gebildet werden, wobei dazu aus den mindestens zwei Einzelbildern durch eine Triangulation Tiefeninformationen zu den jeweiligen Objekt-Punkten gewonnen werden können. Demnach sind lediglich zwei aufgenommene Einzelbilder nötig, um die Punktewolke zu generieren.

Vorzugsweise ist weiterhin vorgesehen, dass die mindestens eine plane Referenz-Fläche aus benachbarten Objekt-Punkten, die in derselben Ebene liegen, derartig festgelegt wird, dass die plane Referenz-Fläche einem farblich und/oder zumindest strukturell abgegrenzten oder abgrenzbaren Bereich aus benachbarten Einzelbild-Bildpunkten in dem mindestens einen Einzelbild zugeordnet werden kann. Demnach wird die plane Referenz-Fläche nicht nur anhand der Lage in einer Ebene festgelegt, sondern auch derartig, dass sich diese in einem zweidimensional aufgenommenen Bild eindeutig wiederfinden lässt. Dadurch wird der Vorgang des Einpassens vereinfacht bzw. kann dieser zuverlässiger erfolgen, da sich die Referenz-Fläche nachfolgend eindeutig wiederfinden lässt.

Vorzugsweise kann dazu vorgesehen sein, dass die plane Referenz-Fläche aus denjenigen benachbarten Objekt-Punkten der Punktewolke gebildet wird, die in derselben Ebene liegen und/oder denen Einzelbild-Bildpunkte mit denselben oder zumindest ähnlichen Farbwerten und/oder Intensitätswerten in dem mindestens einen Einzelbild zugeordnet sind. Auf diese Weise kann auf eine farblich und/oder strukturell abgrenzbare Teil-Fläche zurückgegriffen werden. Demnach kann vorgesehen sein, dass die mindestens eine plane Referenz-Fläche eine Anhänger-Vorderseite vollständig bedeckt, wenn sich beispielsweise keine farblich und/oder strukturell abgrenzbaren kleineren Teil-Flächen auf der Anhänger-Vorderseite finden lassen, aus denen sich eine eindeutig abgrenzbare Referenz-Fläche ableiten lässt, oder die Anhänger-Vorderseite nur teilweise einnimmt. Dadurch kann auch je nach Anhänger-Art eine andere Teil-Fläche bzw. Referenz-Fläche gesucht und festgelegt werden, wodurch das Verfahren flexibel einsetzbar ist bzw. nicht auf bestimmte Muster oder Marker auf dem Anhänger angewiesen ist.

Vorzugsweise ist weiterhin vorgesehen, dass benachbarte Einzelbild-Bildpunkte mit denselben oder zumindest ähnlichen Farbwerten und/oder Intensitätswerten derselben Teil-Fläche des eingelesenen Einzelbildes zugeordnet werden. Auf diese Weise lassen sich Teil-Flächen anhand der Farbe bzw. der Intensität in der Abbildung des Anhängers einfach wiederfinden.

Vorzugsweise ist weiterhin vorgesehen, dass
- aus der mindestens einen vorher gebildeten planen Referenz-Fläche durch eine Koordinatentransformation eine Zwischen-Fläche gebildet wird, wobei die plane Referenz-Fläche in einem dreidimensionalen Koordinatensystem vorliegt und die Zwischen-Fläche in einem zweidimensionalen Koordinatensystem, und
- die jeweils gebildete Zwischen-Fläche durch die geometrische Transformation in die jeweilige Teil-Fläche des eingelesenen Einzelbildes eingepasst wird. Daher sind zwei Verarbeitungsschritte vorgesehen, wenn die Referenz-Fläche und die Teil-Fläche in unterschiedlichen Dimensionen vorliegen. Um in dem Fall die geometrische Transformation bzw. das Einpassen in die Teil-Fläche durchführen zu können, ist zusätzlich auch eine Koordinatentransformation anzuwenden, wobei die geometrische und die Koordinatentransformation durch die Anwendung einer gemeinsamen Transformationsmatrix gemeinsam durchgeführt werden können.

Vorzugsweise ist dabei vorgesehen, dass die jeweils gebildete Zwischen-Fläche durch die geometrische Transformation verschoben und/oder rotiert und/oder geschert und/oder skaliert wird, beispielsweise in mehreren Iterationsschritten. Durch einen iterativen Prozess lässt sich der Vorgang des Einpassens einfach und zuverlässig durchführen, wobei aus der daraus folgenden geometrischen Transformation dann aus geometrischen Betrachtungen der Knickwinkel ermittelt werden kann. Um dabei unterschiedliche Entfernungen bzw. Größen der Referenz-Fläche zu berücksichtigen, kann die Suche bzw. das Einpassen in unterschiedlichen Auflösungsstufen stattfinden (Stichwort Bildpyramide).

Vorzugsweise ist weiterhin vorgesehen, dass pixelweise Farbwerte und/oder Intensitätswerte in der jeweilige Teil-Fläche und in der gebildeten Zwischen-Fläche verglichen werden zum Einpassen der mindestens einen vorher gebildeten planen Referenz-Fläche in die mindestens eine ermittelte Teil-Fläche. Das Einpassen kann also in einfacher und zuverlässiger Weise durch das Suchen von Pixelähnlichkeiten zwischen den jeweiligen Flächen erfolgen, beispielsweise in dem iterativen Prozess.

Die Erfindung wird im Folgenden anhand von Figuren näher erläutert. Es zeigen:
- Fig. 1: schematische Ansichten eines Fahrzeuges;
- Fig. 2: ein Flussdiagramm des erfindungsgemäßen Verfahrens;
- Fig. 3: eine Detailansicht eines in zwei Einzelbildern einer einzigen Kamera abgebildeten Objektes; und
- Fig. 4: eine Detailansicht der aufgenommenen Einzelbilder.

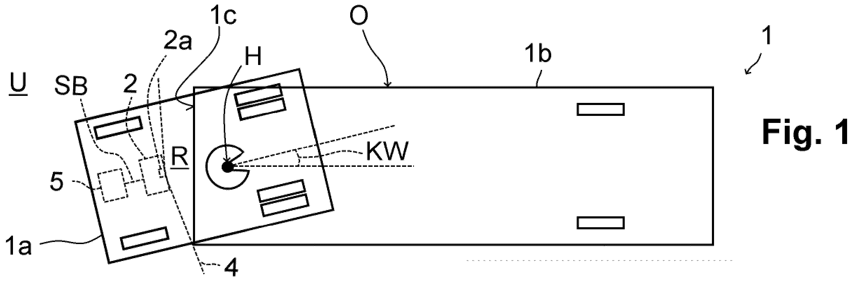

Figur 1 zeigt in der Draufsicht schematisiert ein Fahrzeug 1, das aus einem Zugfahrzeug 1a und einem Anhänger 1b besteht, wobei der Anhänger 1b in der gezeigten Situation an das Zugfahrzeug 1a angekuppelt ist. Unter Verwendung eines erfindungsgemäßen Verfahrens, das nachfolgend beschrieben wird, kann ein Knickwinkel KW zwischen dem Anhänger 1b und dem Zugfahrzeug 1a, d.h. ein Winkel zwischen der Longitudinalachse des Anhängers und der Longitudinalachse des Zugfahrzeuges, ermittelt werden.

Dazu ist am Zugfahrzeug 1a ein Kamerasystem 2 angeordnet, das mindestens eine Kamera 2a, insbesondere in monokularer Ausführung, aufweist, mit dem eine Umgebung U insbesondere hinter dem Zugfahrzeug 1a aufgenommen werden kann. Ein Sichtbereich 4 der mindestens einen Kamera 2a ist also insbesondere auf einen Rückraum R hinter dem Zugfahrzeug 1a ausgerichtet. Um den gesamten oder zumindest einen großen Bereich der Umgebung U, insbesondere den Rückraum R, abdecken zu können, kann bzw. können die Kamera(s) 2a z.B. als Fisheye-Kamera(s) ausgeführt sein, die jeweils einen Sichtbereich 4 mit einem Sichtwinkel von gleich oder größer 170° abdecken kann bzw. können.

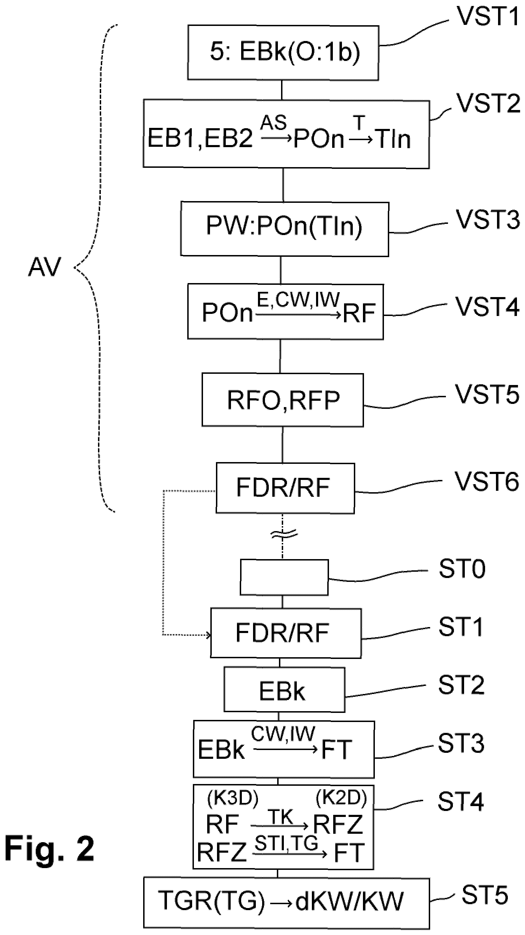

Von der jeweiligen Kamera 2a ausgegebene Bild-Signale SB werden ggf. vorverarbeitet an eine Verarbeitungseinheit 5 z.B. im Zugfahrzeug 1a ausgegeben, die ausgebildet ist, basierend auf den Bild-Signalen SB Einzelbilder EBk der jeweiligen Kamera 2a zu verarbeiten, um das in Fig. 2 beispielhaft dargestellte Verfahren zum Ermitteln des Knickwinkels KW zwischen dem Zugfahrzeug 1a und dem Anhänger 1b auszuführen:
Das Verfahren ist dabei zweigeteilt, wobei Vor-Verfahrensschritte VST1 bis VST6 durchgeführt werden, beispielsweise während eines Ankoppelvorganges AV, und Haupt-Verfahrensschritte ST1 bis ST5 durchgeführt werden, während das Fahrzeug 1 als Gespann aus dem Zugfahrzeug 1a und dem angekuppeltem Anhänger 1b betrieben wird, d.h. sich ein bestimmter Knickwinkel KW zwischen beiden einstellt. In den nachfolgend beschriebenen Vor-Verfahrensschritten VST1 bis VST6 wird dabei ausgenutzt, dass sich das Zugfahrzeug 1a mit der Kamera 2a gegenüber dem Anhänger 1b auf jeden Fall bewegt. Dadurch kann unter Rückgriff auf einen SfM-Algorithmus AS (SfM: Structure from Motion) von der Verarbeitungseinheit 5 aus mindestens zwei von der Kamera 2a aufgenommenen Einzelbildern EBk eine 3D-Rekonstruktion der aktuellen Szene erzeugt werden.

In einem ersten Vor-Verfahrensschritt VST1 werden dazu zunächst zwei (k= 1,2) oder mehrere (k= 1,2,3, ...) die Umgebung U um das Zugfahrzeug 1a charakterisierende Einzelbilder EBk von der Verarbeitungseinheit 5 eingelesen, wobei der anzukoppelnde Anhänger 1b als Objekt O auf den Einzelbildern EBk abgebildet ist. Die Einzelbilder EBk enthalten dabei eine 2D-Darstellung der aktuellen Szene (Szenen-Darstellung in zwei Dimensionen).

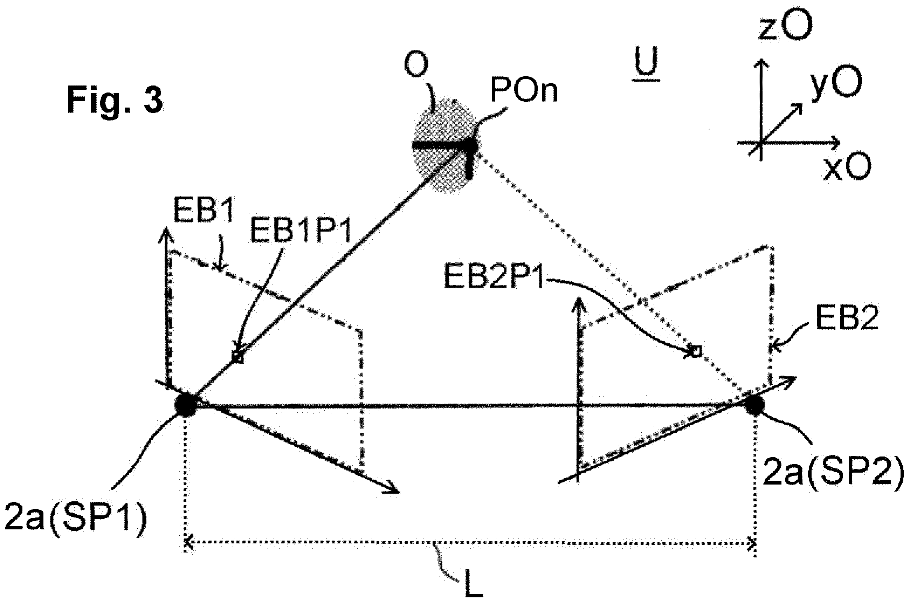

Anschließend werden in einem zweiten Vor-Verfahrensschritt VST2 mittels des SfM-Algorithmus AS aus diesen mindestens zwei Einzelbildern EBk Tiefeninformationen Tln zu aufgenommenen bzw. in den Einzelbildern EBk abgebildeten Objekt-Punkten POn (s. Fig. 3), die zumindest dem Anhänger 1b im Rückraum R zugeordnet sind, gewonnen. Das Extrahieren von Tiefeninformationen Tln über den SfM-Algorithmus AS erfolgt dabei, indem ein Objekt-Punkt POn auf dem Anhänger 1b von mindestens zwei unterschiedlichen Standpunkten SP1, SP2 aus von derselben Kamera 2a aufgenommen wird, wie in Fig. 3 angedeutet.

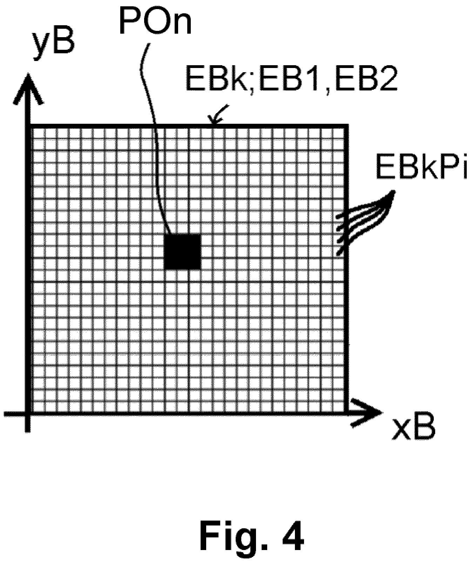

Durch Triangulation T können anschließend die Tiefeninformationen Tln bezüglich jedes paarweise aufgenommenen Objekt-Punktes POn erhalten werden. Dazu werden Bild-Koordinaten xB, yB in einem zweidimensionalen Koordinatensystem K2D (s. Fig. 4) zu mindestens einem ersten Einzelbild-Bildpunkt EB1P1 in einem ersten Einzelbild EB1 und mindestens einem ersten Einzelbild-Bildpunkt EB2P1 in einem zweiten Einzelbild EB2 derselben Kamera 2a bestimmt. Beide Einzelbilder EB1, EB2 werden von der Kamera 2a an unterschiedlichen Standpunkten SP1, SP2 aufgenommen, d.h. zwischen den Einzelbildern EB1, EB2 bewegt sich das Zugfahrzeug 1a bzw. die Kamera 2a um eine Basislänge L. Die beiden ersten Einzelbild-Bildpunkte EB1P1, EB2P1 werden in den jeweiligen Einzelbildern EB1, EB2 in bekannter Weise derartig gewählt, dass sie demselben Objekt-Punkt POn auf dem jeweils abgebildeten Anhänger 1b zugeordnet sind.

Auf diese Weise können für einen Anhänger 1b mit seinen Objekt-Punkten POn jeweils ein oder mehrere Paare von Einzelbild-Bildpunkten EB1Pi, EB2Pi für ein (n=1) oder auch mehrere (n = 1, 2, ...) Objekt-Punkte POn ermittelt werden. In einer Näherung können nachfolgend aus den für den jeweiligen Anhänger 1b bzw. die Objekt-Punkte POn ermittelten Bild-Koordinaten xB, yB der Einzelbild-Bildpunkte EB1Pi, EB2Pi durch Triangulation T die absoluten, tatsächlichen Objekt-Koordinaten xO, yO, zO (Weltkoordinaten) des oder der jeweiligen Objekt-Punkte POn des dreidimensionalen Anhängers 1b berechnet bzw. abgeschätzt werden. Um die Triangulation T ausführen zu können, wird auf eine entsprechend ermittelte Basislänge L zwischen den Standpunkten SP1, SP2 der Kamera 2a zurückgegriffen, beispielsweise aus Bewegungsdaten des Zugfahrzeuges 1a bzw. der Kamera 2a.

Falls die Bewegungsdaten nicht vorliegen, ist es auch möglich, im Zuge des SfM-Algorithmus AS die Bewegungsdaten durch visuelle Odometrie, d.h. "visuell" aus den Einzelbildern EBk zu bestimmen. Dazu wird die Bewegung der Kamera 2a anhand von zeitlich getrackten Merkmalspunkten bzw. Objekt-Punkten POn aus Einzelbildern EBk abgeschätzt.

Wurde die Triangulation T für eine ausreichende Anzahl an Objekt-Punkten POn eines Anhängers 1b durchgeführt, kann daraus in einem dritten Vor-Verfahrensschritt VST3 eine dreidimensionale Punktewolke PW aus mehreren Objekt-Punkten POn in tatsächlichen Objekt-Koordinaten xO, yO, zO (Weltkoordinaten) generiert werden, um den jeweiligen Anhänger 1b im dreidimensionalen Raum zu beschreiben. Mittels des SfM-Algorithmus AS wird also aus der zweidimensionalen Darstellung der Szene (Szenen-Darstellung in den Einzelbildern EBk) eine Punktewolke PW im dreidimensionalen Raum generiert, die beispielsweise Seitenflächen des Anhängers 1b beinhaltet. Um dabei zu verifizieren, dass es sich tatsächlich um Objekt-Punkte POn auf dem Anhänger 1b handelt, kann die Punktewolke PW beispielsweise mit einem hinterlegten Anhänger-Modell aus einer Anhänger-Datenbank verglichen werden.

In einem vierten Vor-Verfahrensschritt VST4 werden in der Punktewolke PW ein oder mehrere abgrenzbare plane Teilbereiche auf dem Anhänger 1b gesucht. Dies erfolgt beispielsweise dadurch, dass für benachbarte Objekt-Punkte POn bzw. für zusammenhängende Teilmengen der Punktewolke PW durch geometrische Betrachtungen geprüft wird, ob diese in einer Ebene E liegen. Sind mehrere Objekt-Punkte POn der Punktewolke PW, die benachbart zueinander liegen, unter Berücksichtigung einer Toleranz innerhalb derselben Ebene E angeordnet, wird eine zusammenhängende plane Referenz-Fläche RF aus diesen benachbarten Objekt-Punkte POn gebildet.

Vorzugsweise wird die plane Referenz-Fläche RF dabei ergänzend derartig festgelegt, dass diese auch in den Einzelbildern EBk abgegrenzt ist, beispielsweise farblich und/oder strukturell, so dass die plane Referenz-Fläche RF auch in den zweidimensionalen Einzelbildern EBk auffindbar ist. Für die jeweiligen Objekt-Punkte POn, die in derselben Ebene E liegen, wird also unter Umständen ergänzend geprüft, ob diesen dieselben oder ähnliche Farbwerte CW und/oder Intensitätswerte IW in den Einzelbildern EBk zugeordnet sind.

Die plane Referenz-Fläche RF kann dabei beispielsweise über die gesamte Anhänger-Vorderseite 1c ausgedehnt sein, z.B. wenn sich auf der Anhänger-Vorderseite 1c keine farblichen und/oder strukturellen Unterschiede ergeben, aus denen sich eine eindeutig abgrenzbare Referenz-Fläche RF ableiten lässt, oder aber über Teilbereiche der Anhänger-Vorderseite 1c, die entsprechend farblich und/oder strukturell abgegrenzt sind, beispielsweise auch durch Schattierungen. Dabei können auch mehrere plane Referenz-Flächen RF aufgefunden werden, wenn sich jeweils zusammenhängende Objekt-Punkte POn in derselben Ebene E in der Punktewolke PW auffinden bzw. identifizieren lassen.

In einem fünften Vor-Verfahrensschritt VST5 wird für jede ermittelte plane Referenz-Fläche RF eine räumliche Referenz-Orientierung RFO und/oder eine räumliche Referenz-Position RFP (oder die Referenz-Pose) relativ zum Anhänger 1b ermittelt, um deren genaue Lage im Raum (in 3D) zu ermitteln. Die Referenz-Orientierung RFO und die Referenz-Position RFP können beispielsweise relativ zum Königszapfen des Anhängers 1b oder einer Ecke des Anhängers 1b angegeben werden, wobei dies unmittelbar aus den Objektkoordinaten xO, yO, zO der Objekt-Punkte POn, die der jeweiligen planen Referenz-Fläche RF zugeordnet sind, und/oder aus den bekannten geometrischen Abmessungen des jeweiligen Anhängers 1b herleitbar ist.

Jede gefundene plane Referenz-Fläche RF wird anschließend in einem sechsten Vor-Verfahrensschritt VST6 mit ihrer entsprechenden räumlichen Referenz-Orientierung RFO relativ zum Anhänger 1 b und ggf. ihrer räumlichen Referenz-Position RFP relativ zum Anhänger 1b (oder der Pose) z.B. als Bestandteil einer Referenz-Darstellung FDR abgespeichert. Diese Referenz-Fläche(n) RF bzw. diese Referenz-Darstellung FDR dient im Folgenden als Muster bzw. Template für die Ermittlung eines Knickwinkels KW, indem ermittelt wird, wie sich die Lage der Referenz-Fläche(n) RF während der Fahrt des Fahrzeuges 1 relativ zum Zugfahrzeug 1a verändert.

Dazu wird oder werden in einem ersten Haupt-Verfahrensschritt ST1 von der Verarbeitungseinheit 5 die gespeicherte(n) Referenz-Fläche(n) RF bzw. die Referenz-Darstellung FDR eingelesen, während der Anhänger 1b, für den vorher die Vor-Verfahrensschritten VST1 bis VST6 durchgeführt wurden, an das Zugfahrzeug 1a angekoppelt ist, was in einem Initialisierungsschritt ST0 vorher entsprechend geprüft werden kann.

Anschließend wird in einem zweiten Haupt-Verfahrensschritt ST2 von der Verarbeitungseinheit 5 mindestens ein Einzelbild EBk der Kamera 2a eingelesen, während das Zugfahrzeug 1a mit dem angekuppelten Anhänger 1b betrieben wird. In einem dritten Haupt-Verfahrensschritt ST3 wird bzw. werden in dem mindestens einen eingelesenen Einzelbild EBk ein oder mehrere Teil-Flächen FT identifiziert, wobei beispielsweise benachbarte Einzelbild-Bildpunkte EBkPi mit denselben oder ähnlichen Farbwerten CW und/oder Intensitätswerten IW derselben Teil-Fläche FT zugeordnet werden.

Wurde(n) auf diese Weise eine oder mehrere Teil-Fläche(n) FT in dem mindestens einen Einzelbild EBk identifiziert, wird in einem vierten Haupt-Verfahrensschritt ST4 versucht, die eingelesene(n) planen Referenz-Fläche(n) RF in diese Teil-Fläche(n) FT einzupassen, beispielsweise in mehreren Iterationsschritten STI. Dabei wird bzw. werden durch eine Koordinatentransformation TK zunächst die eingelesene(n) planen Referenz-Fläche(n) RF, die räumlich bzw. in einem dreidimensionalen Koordinatensystem KD3 vorliegen, in ein zweidimensionales Koordinatensystem K2D überführt. Dadurch werden aus der oder den planen Referenz-Fläche(n) RF zweidimensionale Zwischen-Flächen RFZ gebildet bzw. erzeugt, um die planen Referenz-Fläche(n) RF (als Zwischen-Flächen RFZ) in derselben Dimension darzustellen wie die Teil-Fläche(n) FT. Durch eine geometrische Transformation TG werden die erzeugten Zwischen-Fläche(n) RFZ anschließend derartig beispielsweise in einem iterativen Prozess verschoben und/oder rotiert und/oder geschert und/oder skaliert, dass diese bestmöglich in die Teil-Fläche(n) FT passen.

Dazu werden beispielweise Pixelähnlichkeiten zwischen einer Teil-Fläche FT und einer erzeugten Zwischen-Fläche RFZ gesucht, um eine korrekte Zuordnung zu erreichen, d.h. in der Teil-Fläche FT und in der gebildeten Zwischen-Fläche RFZ werden z.B. die jeweils vorliegenden Farbwerte CW und/oder Intensitätswerte IW pixelweise verglichen. Ist eine ausreichende Übereinstimmung gefunden, wird von einer korrekten Zuordnung zwischen einer Teil-Fläche FT und einer Zwischen-Fläche RFZ (bzw. planen Referenz-Fläche RF) ausgegangen.

Aus der geometrischen Transformation TG, über die die jeweilige Zwischen-Fläche RFZ in die jeweilige Teil-Fläche RF einpasst wird, lässt sich dann in einem fünften Haupt-Verfahrensschritt ST5 aus geometrischen Betrachtungen unmittelbar der Knickwinkel KW herleiten. Die geometrische Transformation TG überführt nämlich die in das zweidimensionale Koordinatensystem K2D transformierte plane Referenz-Fläche RF bzw. die dadurch erzeugte Zwischen-Fläche RFZ, der die im fünften Vor-Verfahrensschritt VST5 ermittelte Referenz-Orientierung RFO zugeordnet ist, auf die Teil-Fläche FT auf dem Anhänger 1b. Ein rotatorischer Anteil TGR der geometrischen Transformation TG beschreibt also insbesondere eine Rotation der erzeugten Zwischen-Fläche RFZ um eine Schwenkachse H des Anhängers 1b (vgl. Kupplungspunkt zwischen Anhänger 1b und Zugfahrzeug 1a), woraus sich unmittelbar die Änderung der Lage des Anhängers 1b relativ zum Zugfahrzeug 1a bzw. zur Kamera 2a gegenüber dem Zustand im fünften Vor-Verfahrensschritt VST5 herleiten lässt.

Dabei wird angenommen, dass die Teil-Fläche FT dieselbe Referenz-Orientierung RFO relativ zum Anhänger 1b aufweist wie die jeweils zugeordnete Referenz-Fläche RF, da sich deren relative Lage zum Anhänger 1b bei variierendem Knickwinkel KW nicht verändert, sondern nur die relative Lage zum Zugfahrzeug 1a bzw. zur Kamera 2a. Aus geometrischen Betrachtungen folgt aus der Änderung der Lage des Anhängers 1b relativ zum Zugfahrzeug 1a bzw. zur Kamera 2a dann unmittelbar eine Knickwinkel-Änderung dKW und daraus über eine entsprechende vorab ausgeführte Kalibrierung auch der Knickwinkel KW an sich.

Für jedes aufgenommene Einzelbild EBk kann auf diese Weise der aktuelle Knickwinkel KW unter Rückgriff auf die plane(n) Referenz-Fläche(n) RF ermittelt werden. Wird dies für mehrere Referenz-Flächen RF parallel zueinander durchgeführt, kann auch eine Plausibilisierung stattfinden, indem die aus unterschiedlichen Referenz-Flächen RF hergeleiteten Knickwinkel KW miteinander verglichen werden.

### Bezugszeichenliste (Bestandteil der Beschreibung)

- 1: Fahrzeug
- 1a: Zugfahrzeug
- 1b: Anhänger
- 1c: Anhänger-Vorderseite
- 2: Kamerasystem
- 2a: Kamera
- 4: Sichtbereich
- 5: Verarbeitungseinheit
- AS: SfM-Algorithmus
- AV: Ankoppelvorgang
- CW: Farbwerte
- dKW: Knickwinkel-Änderung
- E: Ebene
- EBk: k. Einzelbild
- EBkPi: i. Einzelbild-Bildpunkt im k. Einzelbild EBk
- FDR: Referenz-Darstellung
- FT: Teil-Fläche
- H: Schwenkachse
- IW: Intensitätswert
- K2D: zweidimensionales Koordinatensystem
- K3D: dreidimensionales Koordinatensystem
- KW: Knickwinkel
- L: Basislänge
- O: Objekt
- POn: n. Objekt-Punkt
- PW: Punktewolke
- R: Rückraum
- RF: plane Referenz-Fläche
- RFO: Referenz-Orientierung der planen Referenz-Fläche RF
- RFP: Referenz-Position der planen Referenz-Fläche RF
- RFZ: Zwischen-Fläche
- SB: Bild-Signal
- SP1: 1. Standpunkt
- SP2: 2. Standpunkt
- STI: Iterationsschritte
- T: Triangulation
- TG: geometrische Transformation
- TGR: rotatorischer Anteil der geometrischen Transformation TG
- Tln: Tiefeninformation
- TK: Koordinatentransformation
- U: Umgebung
- xB, yB: Bild-Koordinaten
- xO, yO, zO: Objekt-Koordinaten
- VST1-VST6: Vor-Verfahrensschritte
- ST1-ST5: Haupt-Verfahrensschritte

## Patentansprüche

1. Verfahren zum Ermitteln eines Knickwinkels (KW) zwischen einem Zugfahrzeug (1a) und einem daran angekoppelten Anhänger (1b), wobei der Anhänger (1b) mithilfe eines Kamerasystems (2) in Einzelbildern (EBk) mit Einzelbild-Bildpunkten (EBkPi) abgebildet werden kann, mit mindestens den folgenden Schritten:
- Ermitteln einer Punktewolke (PW) aus mindestens einem Einzelbild (EBk), in dem zumindest der Anhänger (1b) abgebildet ist, wobei die Punktewolke (PW) aus Objekt-Punkten (POn) besteht, die dem Anhänger (1b) zugeordnet sind (VST3);
- Bilden mindestens einer planen Referenz-Fläche (RF) aus denjenigen benachbarten Objekt-Punkten (POn) der Punktewolke (PW), die in derselben Ebene (E) liegen (VST4), wobei die jeweilige plane Referenz-Fläche (RF) in einer festen räumlichen Orientierung (RFO) und/oder einer festen räumlichen Position (RFP) relativ zum Anhänger (1b) liegt;
- Einlesen mindestens eines Einzelbildes (EBk) (ST2), in dem der an das Zugfahrzeug (1a) angekuppelte Anhänger (1b) abgebildet ist, und Ermitteln mindestens einer Teil-Fläche (FT) in diesem mindestens einen eingelesenen Einzelbild (EBk) (ST3); **gekennzeichnet durch**
- Einpassen der mindestens einen vorher gebildeten planen Referenz-Fläche (RF) in die mindestens eine ermittelte Teil-Fläche (FT) des eingelesenen Einzelbildes (EBk) unter Anwendung einer geometrischen Transformation (TG) (ST4);
- Ermitteln des Knickwinkels (KW) zwischen dem Zugfahrzeug (1a) und dem Anhänger (1b) in Abhängigkeit eines rotatorischen Anteils (TGR) der angewandten geometrischen Transformation (TG), wobei der rotatorische Anteil (TGR) der angewandten geometrischen Transformation (TG) eine Rotation der planen Referenz-Fläche (RF) um eine Schwenkachse (H) des Anhängers (1b) charakterisiert.

2. Verfahren nach Anspruch 1, **dadurch gekennzeichnet, dass** das mindestens eine Einzelbild (EBk) zum Ermitteln der Punktewolke (PW) (VST3) aufgenommen wird, wenn der Anhänger (1b) noch nicht an das Zugfahrzeug (1a) angekuppelt ist, beispielsweise während eines Ankoppelvorganges (AV).

3. Verfahren nach Anspruch 1 oder 2, **dadurch gekennzeichnet, dass** die aus dem mindestens einen Einzelbild (EBk) ermittelte Punktewolke (PW) und/oder die mindestens eine gebildete plane Referenz-Fläche (RF) abgespeichert wird, vorzugsweise mit der räumlichen Orientierung (RFO) und/oder der räumlichen Position (RFP) der jeweiligen planen Referenz-Fläche (RF) relativ zum Anhänger (1b) (VST6).

4. Verfahren nach einem der vorhergehenden Ansprüche, **dadurch gekennzeichnet, dass** die Punktewolke (PW) mithilfe eines SfM-Algorithmus (AS) aus mindestens zwei Einzelbildern (EBk) ermittelt wird, wobei der Anhänger (1b) in den mindestens zwei Einzelbildern (EBk) von mindestens zwei unterschiedlichen Standpunkten (SP1, SP2) aus aufgenommen ist, vorzugsweise durch eine monokulare Kamera (2a) des Kamerasystems (2).

5. Verfahren nach Anspruch 3, **dadurch gekennzeichnet, dass** die Punktewolke (PW) aus mehreren Objekt-Punkten (POn), die zumindest dem Anhänger (1b) zugeordnet sind, gebildet ist, wobei dazu aus den mindestens zwei Einzelbildern (EBk) durch eine Triangulation (T) Tiefeninformationen (Tln) zu den jeweiligen Objekt-Punkten (POn) gewonnen werden (VST2).

6. Verfahren nach einem der vorhergehenden Ansprüche, **dadurch gekennzeichnet, dass** die mindestens eine plane Referenz-Fläche (RF) aus benachbarten Objekt-Punkten (POn), die in derselben Ebene (E) liegen, derartig festgelegt wird, dass die plane Referenz-Fläche (RF) einem farblich und/oder strukturell abgegrenzten oder abgrenzbaren Bereich aus benachbarten Einzelbild-Bildpunkten (EBkPi) in dem mindestens einen Einzelbild (EBk) zugeordnet werden kann.

7. Verfahren nach Anspruch 6, **dadurch gekennzeichnet, dass** die plane Referenz-Fläche (RF) aus denjenigen benachbarten Objekt-Punkten (POn) der Punktewolke (PW) gebildet wird, die in derselben Ebene (E) liegen und/oder denen Einzelbild-Bildpunkte (EBkPi) mit denselben oder zumindest ähnlichen Farbwerten (CW) und/oder Intensitätswerten (IW) in dem mindestens einen Einzelbild (EBk) zugeordnet sind.

8. Verfahren nach einem der vorhergehenden Ansprüche, **dadurch gekennzeichnet, dass** die mindestens eine plane Referenz-Fläche (RF) eine Anhänger-Vorderseite (1c) vollständig bedeckt oder die Anhänger-Vorderseite (1c) nur teilweise einnimmt.

9. Verfahren nach einem der vorhergehenden Ansprüche, **dadurch gekennzeichnet, dass** benachbarte Einzelbild-Bildpunkte (EBkPi) mit denselben oder zumindest ähnlichen Farbwerten (CW) und/oder Intensitätswerten (IW) derselben Teil-Fläche (FT) des eingelesenen Einzelbildes (EBk) zugeordnet werden (ST3).

10. Verfahren nach einem der vorhergehenden Ansprüche, **dadurch gekennzeichnet, dass**
- aus der mindestens einen vorher gebildeten planen Referenz-Fläche (RF) durch eine Koordinatentransformation (TK) eine Zwischen-Fläche (RFZ) gebildet wird, wobei die plane Referenz-Fläche (RF) in einem dreidimensionalen Koordinatensystem (K3D) vorliegt und die Zwischen-Fläche (RFZ) in einem zweidimensionalen Koordinatensystem (K2D), und
- die jeweils gebildete Zwischen-Fläche (RFZ) durch die geometrische Transformation (TG) in die jeweilige Teil-Fläche (TF) des eingelesenen Einzelbildes (EBk) eingepasst wird (ST3).

11. Verfahren nach Anspruch 10, **dadurch gekennzeichnet, dass** die jeweils gebildete Zwischen-Fläche (RFZ) durch die geometrische Transformation (TG) verschoben und/oder rotiert und/oder geschert und/oder skaliert wird, beispielsweise in mehreren Iterationsschritten (STI).

12. Verfahren nach Anspruch 10 oder 11, **dadurch gekennzeichnet, dass** pixelweise Farbwerte (CW) und/oder Intensitätswerte (IW) in der jeweilige Teil-Fläche (FT) und in der gebildeten Zwischen-Fläche (RFZ) verglichen werden zum Einpassen der mindestens einen vorher gebildeten planen Referenz-Fläche (RF) in die mindestens eine ermittelte Teil-Fläche (FT).

13. Verarbeitungseinheit (5) für ein Fahrzeug (1) aus einem Zugfahrzeug (1a) und einem Anhänger (1b), insbesondere zur Durchführung eines Verfahrens nach einem der vorhergehenden Ansprüche, wobei die Verarbeitungseinheit (5) ausgebildet ist,
- eine Punktewolke (PW) aus mindestens einem von einem Kamerasystem (2) aufgenommenen Einzelbild (EBk), in dem zumindest der Anhänger (1b) abgebildet ist, zu ermitteln, wobei die Punktewolke (PW) aus Objekt-Punkten (POn) besteht, die dem Anhänger (1b) zugeordnet sind;
- mindestens eine plane Referenz-Fläche (RF) aus denjenigen benachbarten Objekt-Punkten (POn) der Punktewolke (PW) zu bilden, die in derselben Ebene (E) liegen, wobei die jeweilige plane Referenz-Fläche (RF) in einer festen räumlichen Orientierung (RFO) und/oder einer festen räumlichen Position (RFP) relativ zum Anhänger (1b) liegt;
- mindestens ein Einzelbild (EBk) einzulesen, in dem der an das Zugfahrzeug (1a) angekuppelte Anhänger (1b) abgebildet ist, und mindestens eine Teil-Fläche (FT) in diesem mindestens einen eingelesenen Einzelbild (EBk) zu ermitteln; **gekennzeichnet durch**
- mindestens eine vorher gebildete plane Referenz-Fläche (RF) in die mindestens eine ermittelte Teil-Fläche (FT) unter Anwendung einer geometrischen Transformation (TG) einzupassen; und
- einen Knickwinkel (KW) zwischen dem Zugfahrzeug (1a) und dem Anhänger (1b) in Abhängigkeit eines rotatorischen Anteils (TGR) der angewandten geometrischen Transformation (TG) zu ermitteln, wobei der rotatorische Anteil (TGR) der angewandten geometrischen Transformation (TG) eine Rotation der planen Referenz-Fläche (RF) um eine Schwenkachse (H) des Anhängers (1b) charakterisiert.

14. Fahrzeug (1) aus einem Zugfahrzeug (1a) und einem Anhänger (1b) mit einer Verarbeitungseinheit (5) nach Anspruch 13 sowie einem Kamerasystem (2), vorzugsweise mit einer monokularen Kamera (2a), deren Sichtbereich (4) auf den Anhänger (1b) im Rückraum (R) des Zugfahrzeuges (1b) ausgerichtet oder ausrichtbar ist.

## Claims

1. Method for determining an articulation angle (KW) between a towing vehicle (1a) and a trailer (1b) coupled thereto, wherein the trailer (1b) can be imaged in single images (EBk) having single-image pixels (EBkPi) using a camera system (2), comprising at least the following steps:
- determining a point cloud (PW) from at least one single image (EBk) in which at least the trailer (1b) is imaged, wherein the point cloud (PW) consists of object points (POn) which are assigned to the trailer (1b) (VST3);
- forming at least one planar reference surface (RF) from the adjacent object points (POn) of the point cloud (PW) which lie in the same plane (E) (VST4), wherein each planar reference surface (RF) lies in a fixed spatial orientation (RFO) and/or a fixed spatial position (RFP) relative to the trailer (1b);
- reading in at least one single image (EBk) (ST2) in which the trailer (1b) coupled to the towing vehicle (1a) is imaged, and determining at least one partial surface (FT) in this at least one read-in single image (EBk) (ST3);
**characterized by**
- fitting the at least one previously formed planar reference surface (RF) into the at least one determined partial surface (FT) of the read-in single image (EBk) by applying a geometric transformation (TG) (ST4);
- determining the articulation angle (KW) between the towing vehicle (1a) and the trailer (1b) as a function of a rotational component (TGR) of the applied geometric transformation (TG), wherein the rotational component (TGR) of the applied geometric transformation (TG) characterizes a rotation of the planar reference surface (RF) about a pivot axis (H) of the trailer (1b).

2. Method according to claim 1, **characterized in that** to determine the point cloud (PW) (VST3), the at least one single image (EBk) is captured when the trailer (1b) is not yet coupled to the towing vehicle (1a), for example during a coupling process (AV).

3. Method according to claim 1 or 2, **characterized in that** the point cloud (PW) determined from the at least one single image (EBk) and/or the at least one formed planar reference surface (RF) is stored, preferably together with the spatial orientation (RFO) and/or the spatial position (RFP) of each planar reference surface (RF) relative to the trailer (1b) (VST6).

4. Method according to any of the preceding claims, **characterized in that** the point cloud (PW) is determined using an SfM algorithm (AS) from at least two single images (EBk), the trailer (1b) being captured in the at least two single images (EBk) from at least two different viewpoints (SP1, SP2), preferably by a monocular camera (2a) of the camera system (2).

5. Method according to claim 3, **characterized in that** the point cloud (PW) is formed from a plurality of object points (POn) which are assigned to at least the trailer (1b), depth information (Tln) regarding the respective object points (POn) being obtained from the at least two single images (EBk) by triangulation (T) (VST2).

6. Method according to any of the preceding claims, **characterized in that** the at least one planar reference surface (RF) is defined from adjacent object points (POn) lying in the same plane (E) in such a way that the planar reference surface (RF) can be assigned to a region which is delimited or can be delimited by color and/or by structure and comprises adjacent single-image pixels (EBkPi) in the at least one single image (EBk).

7. Method according to claim 6, **characterized in that** the planar reference surface (RF) is formed from the adjacent object points (POn) of the point cloud (PW) which lie in the same plane (E) and/or to which single-image pixels (EBkPi) having the same or at least similar color values (CW) and/or intensity values (IW) are assigned in the at least one single image (EBk).

8. Method according to any of the preceding claims, **characterized in that** the at least one planar reference surface (RF) completely covers a trailer front side (1c) or only partially occupies the trailer front side (1c).

9. Method according to any of the preceding claims, **characterized in that** adjacent single-image pixels (EBkPi) having the same or at least similar color values (CW) and/or intensity values (IW) are assigned to the same partial surface (FT) of the read-in single image (EBk) (ST3).

10. Method according to any of the preceding claims, **characterized in that**
- an intermediate surface (RFZ) is formed from the at least one previously formed planar reference surface (RF) by a coordinate transformation (TK), the planar reference surface (RF) being present in a three-dimensional coordinate system (K3D) and the intermediate surface (RFZ) being present in a two-dimensional coordinate system (K2D), and
- the intermediate surface (RFZ) formed in each case is fitted into the relevant partial surface (TF) of the read-in single image (EBk) by the geometric transformation (TG) (ST3).

11. Method according to claim 10, **characterized in that** the intermediate surface (RFZ) formed in each case is shifted and/or rotated and/or sheared and/or scaled by the geometric transformation (TG), for example in a plurality of iteration steps (STI).

12. Method according to claim 10 or 11, **characterized in that** pixel-by-pixel color values (CW) and/or intensity values (IW) in the relevant partial surface (FT) and in the formed intermediate surface (RFZ) are compared in order to fit the at least one previously formed planar reference surface (RF) into the at least one determined partial surface (FT).

13. Processing unit (5) for a vehicle (1) comprising a towing vehicle (1a) and a trailer (1b), in particular for carrying out a method according to any of the preceding claims, wherein the processing unit (5) is designed
- to determine a point cloud (PW) from at least one single image (EBk) which is captured by a camera system (2) and in which at least the trailer (1b) is imaged, wherein the point cloud (PW) consists of object points (POn) which are assigned to the trailer (1b);
- to form at least one planar reference surface (RF) from the adjacent object points (POn) of the point cloud (PW) which lie in the same plane (E), wherein each planar reference surface (RF) lies in a fixed spatial orientation (RFO) and/or a fixed spatial position (RFP) relative to the trailer (1b);
- to read in at least one single image (EBk) in which the trailer (1b) coupled to the towing vehicle (1a) is imaged, and to determine at least one partial surface (FT) in this at least one read-in single image (EBk); **characterized by**
- to fit at least one previously formed planar reference surface (RF) into the at least one determined partial surface (FT) by applying a geometric transformation (TG); and
- to determine an articulation angle (KW) between the towing vehicle (1a) and the trailer (1b) as a function of a rotational component (TGR) of the applied geometric transformation (TG), wherein the rotational component (TGR) of the applied geometric transformation (TG) characterizes a rotation of the planar reference surface (RF) about a pivot axis (H) of the trailer (1b).

14. Vehicle (1) comprising a towing vehicle (1a) and a trailer (1b) and having a processing unit (5) according to claim 13 and a camera system (2), preferably having a monocular camera (2a), of which the field of view (4) is or can be aligned with the trailer (1b) in the rear region (R) of the towing vehicle (1b).

## Revendications

1. Procédé permettant de déterminer un angle d'articulation (KW) entre un véhicule tracteur (1a) et une remorque (1b) attelée à celui-ci, dans lequel la remorque (1b) peut être représentée à l'aide d'un système de caméras (2) dans des images individuelles (EBk) avec des points d'images individuelles (EBkPi), comportant au moins les étapes suivantes consistant à :
- déterminer un nuage de points (PW) à partir d'au moins une image individuelle (EBk), dans laquelle au moins la remorque (1b) est représentée, dans lequel le nuage de points (PW) est constitué de points d'objet (POn) qui sont associés à la remorque (1b) (VST3) ;
- former au moins une surface de référence plane (RF) à partir de points d'objet (POn) voisins du nuage de points (PW) qui se trouvent dans le même plan (E) (VST4), dans lequel la surface de référence plane (RF) respective se trouve dans une orientation spatiale fixe (RFO) et/ou dans une position spatiale fixe (RFP) par rapport à la remorque (1b) ;
- lire au moins une image individuelle (EBk) (ST2), dans laquelle la remorque (1b) attelée au véhicule tracteur (1a) est représentée, et déterminer au moins une surface partielle (FT) dans ladite au moins une image individuelle (EBk) lue (ST3) ; **caractérisé par**
- l'adaptation de l'au moins une surface de référence plane (RF) formée auparavant dans l'au moins une surface partielle (FT) déterminée de l'image individuelle (EBk) lue en utilisant une transformation géométrique (TG) (ST4) ;
- la détermination de l'angle d'articulation (KW) entre le véhicule tracteur (1a) et la remorque (1b) en fonction d'une composante rotatoire (TGR) de la transformation géométrique (TG) utilisée, dans lequel la composante rotatoire (TGR) de la transformation géométrique (TG) utilisée caractérise une rotation de la surface de référence plane (RF) autour d'un axe de pivotement (H) de la remorque (1b).

2. Procédé selon la revendication 1, **caractérisé en ce que** l'au moins une image individuelle (EBk) pour la détermination du nuage de points (PW) (VST3) est enregistrée lorsque la remorque (1b) n'est pas encore attelée au véhicule tracteur (1a), par exemple pendant un processus d'attelage (AV).

3. Procédé selon la revendication 1 ou 2, **caractérisé en ce que** le nuage de points (PW) déterminé à partir de l'au moins une image individuelle (EBk) et/ou l'au moins une surface de référence plane (RF) formée sont mémorisées, de préférence avec l'orientation spatiale (RFO) et/ou la position spatiale (RFP) de la surface de référence plane (RF) respective par rapport à la remorque (1b) (VST6).

4. Procédé selon l'une des revendications précédentes,
**caractérisé en ce que** le nuage de points (PW) est déterminé à l'aide d'un algorithme SfM (AS) à partir d'au moins deux images individuelles (EBk), dans lequel la remorque (1b) est enregistrée dans les au moins deux images individuelles (EBk) à partir d'au moins deux points de vue (SP1, SP2) différents, de préférence par une caméra monoculaire (2a) du système de caméras (2).

5. Procédé selon la revendication 3, **caractérisé en ce que** le nuage de points (PW) est formé de plusieurs points d'objet (POn) qui sont associés au moins à la remorque (1b), dans lequel des informations de profondeur (TIn) concernant les points d'objet (POn) respectifs sont obtenues à partir des au moins deux images individuelles (EBk) par une triangulation (T) (VST2).

6. Procédé selon l'une des revendications précédentes,
**caractérisé en ce que** l'au moins une surface de référence plane (RF) est spécifiée à partir de points d'objet (POn) voisins se trouvant dans le même plan (E), de telle sorte que la surface de référence plane (RF) peut être associée à une zone délimitée ou pouvant être délimitée en termes de couleur et/ou de structure à partir de points d'image individuelle (EBkPi) voisins dans l'au moins une image individuelle (EBk).

7. Procédé selon la revendication 6, **caractérisé en ce que** la surface de référence plane (RF) est formée de points d'objet (POn) voisins du nuage de points (PW) qui se trouvent dans le même plan (E) et/ou auxquels sont associés des points d'image individuelle (EBkPi) comportant les mêmes valeurs de couleur (CW) et/ou valeurs d'intensité (IW) ou au moins des valeurs similaires dans l'au moins une image individuelle (EBk).

8. Procédé selon l'une des revendications précédentes,
**caractérisé en ce que** l'au moins une surface plane de référence (RF) recouvre entièrement une face avant de remorque (1c) ou n'occupe que partiellement la face avant de remorque (1c).

9. Procédé selon l'une des revendications précédentes,
**caractérisé en ce que** des points d'image individuelle (EBkPi) voisins comportant les mêmes valeurs de couleur (CW) et/ou valeurs d'intensité (IW) ou au moins des valeurs similaires sont associés à la même surface partielle (FT) de l'image individuelle (EBk) lue (ST3).

10. Procédé selon l'une des revendications précédentes, **caractérisé en ce que**
- une surface intermédiaire (RFZ) est formée à partir de l'au moins une surface de référence plane (RF) formée auparavant par une transformation de coordonnées (TK), dans lequel la surface de référence plane (RF) est présente dans un système de coordonnées tridimensionnel (K3D) et la surface intermédiaire (RFZ) est présente dans un système de coordonnées bidimensionnel (K2D), et
- la surface intermédiaire (RFZ) respectivement formée est adaptée par la transformation géométrique (TG) dans la surface partielle (TF) respective de l'image individuelle (EBk) lue (ST3).

11. Procédé selon la revendication 10, **caractérisé en ce que** la surface intermédiaire (RFZ) respectivement formée est déplacée et/ou tournée et/ou cisaillée et/ou mise à l'échelle par la transformation géométrique (TG), par exemple en plusieurs étapes d'itération (STI).

12. Procédé selon la revendication 10 ou 11, **caractérisé en ce que** des valeurs de couleur (CW) et/ou des valeurs d'intensité (IW) sont comparées pixel par pixel dans la surface partielle (FT) respective et dans la surface intermédiaire (RFZ) formée pour adapter l'au moins une surface de référence plane (RF) formée auparavant dans l'au moins une surface partielle (FT) déterminée.

13. Unité de traitement (5) pour un véhicule (1) constitué d'un véhicule tracteur (1a) et d'une remorque (1b), en particulier pour la mise en œuvre d'un procédé selon l'une des revendications précédentes, dans laquelle l'unité de traitement (5) est configurée pour
- déterminer un nuage de points (PW) à partir d'au moins une image individuelle (EBk) enregistrée par un système de caméras (2), dans laquelle au moins la remorque (1b) est représentée, dans laquelle le nuage de points (PW) est constitué de points d'objet (POn) qui sont associés à la remorque (1b) ;
- former au moins une surface de référence plane (RF) à partir de points d'objet (POn) voisins du nuage de points (PW) qui se trouvent dans le même plan (E), dans laquelle la surface de référence plane (RF) respective se trouve dans une orientation spatiale fixe (RFO) et/ou dans une position spatiale fixe (RFP) par rapport à la remorque (1b) ;
- lire au moins une image individuelle (EBk) dans laquelle la remorque (1b) attelée au véhicule tracteur (1a) est représentée, et déterminer au moins une surface partielle (FT) dans ladite au moins une image individuelle (EBk) lue ;
**caractérisée par**
- l'adaptation d'au moins une surface de référence plane (RF) formée auparavant dans l'au moins une surface partielle (FT) déterminée en utilisant une transformation géométrique (TG) ; et
- la détermination d'un angle d'articulation (KW) entre le véhicule tracteur (1a) et la remorque (1b) en fonction d'une composante rotatoire (TGR) de la transformation géométrique (TG) utilisée, dans laquelle la composante rotatoire (TGR) de la transformation géométrique (TG) utilisée caractérise une rotation de la surface de référence plane (RF) autour d'un axe de pivotement (H) de la remorque (1b).

14. Véhicule (1) composé d'un véhicule tracteur (1a) et d'une remorque (1b) comportant une unité de traitement (5) selon la revendication 13 ainsi qu'un système de caméras (2), de préférence comportant une caméra monoculaire (2a), dont le champ de vision (4) est orienté ou peut être orienté vers la remorque (1b) dans l'espace arrière (R) du véhicule tracteur (1b).
